Europäisches Patentamt

European Patent Office

Office européen des brevets

(19)

(11) Veröffentlichungsnummer: **0 143 738**
**B1**

(12)

# EUROPÄISCHE PATENTSCHRIFT

(45) Veröffentlichungstag der Patentschrift:
09.12.87

(51) Int. Cl.⁴: **G 01 L 9/04**

(21) Anmeldenummer: **84730102.5**

(22) Anmeldetag: **26.09.84**

(54) Druckaufnehmer mit einer druckempfindlichen Membran.

(30) Priorität: **30.09.83 DE 3336094**

(43) Veröffentlichungstag der Anmeldung:
**05.06.85 Patentblatt 85/23**

(45) Bekanntmachung des Hinweises auf die Patenterteilung:
**09.12.87 Patentblatt 87/50**

(84) Benannte Vertragsstaaten:
**AT BE CH DE FR GB IT LI**

(56) Entgegenhaltungen:
**US - A - 3 035 240**
**US - A - 3 520 191**
**US - A - 3 762 208**
**US - A - 4 093 933**
**US - A - 4 236 137**

(73) Patentinhaber: **Siemens Aktiengesellschaft Berlin und München, Wittelsbacherplatz 2, D-8000 München 2 (DE)**

(72) Erfinder: **Schulz, Winfried, Dr. Ing., Kurfürstenstrasse 29, D-1000 Berlin 42 (DE)**

ACTORUM AG

**Beschreibung**

Die Erfindung betrifft einen Druckaufnehmer mit einer druckempfindlichen Membran, die an ihrem Membranrand eingespannt ist und auf der sich ein fest mit ihr verbundener Biegebalken erstreckt, der im Bereich des Membranrandes mit einem Ende mindestens einer Feder starr verbunden ist, die mit ihrem anderen Ende mit dem Membranrand ebenfalls starr verbunden ist, wobei mindestens ein Dehnungsmessstreifen auf der mindestens einen Feder angeordnet ist.

Bei einem derartigen, aus der US-PS 3 520 191 bekannten Druckaufnehmer ist eine druckempfindliche Membran an ihrem Membranrand zwischen zwei Gehäuseteilen des Druckaufnehmers eingespannt. Quer über die Membran erstreckt sich ein fest mit ihr verbundener Biegebalken, der an beiden Enden im Bereich des Membranrandes jeweils eine Einkerbung aufweist; die Einkerbungen bilden Federn, die den Biegebalken an seinen beiden Enden mit dem Membranrand verbinden. Der Biegebalken weist in der Mitte zwischen seinen beiden Enden eine weitere Einkerbung auf. Im Bereich der Einkerbungen bzw. der Federn sind auf diesen oder der Membran Dehnungsmessstreifen angeordnet.

Es ist weiterhin aus der DE-OS 3 004 031 ein Druckaufnehmer bekannt, bei dem eine kreisförmige druckempfindliche Membran an ihrem einen starren Ring bildenden Membranrand fest eingespannt ist. Auf der Membran ist konzentrisch zu dem starren Ring eine biegesteife Kreisscheibe angeordnet, deren Rand über zwei Biegebalken mit dem Innenrand des starren Ringes verbunden ist. Auf jedem Biegebalken sind zwei Dehnungsmessstreifen angeordnet, die bei einseitiger Druckbelastung der Membran durch die Auslenkung der Kreisscheibe gegenüber dem starren Ring auf Dehnung beansprucht werden.

Der Erfindung liegt die Aufgabe zugrunde, einen Druckaufnehmer mit einer druckempfindlichen Membran anzugeben, der eine besonders hohe Empfindlichkeit aufweist und insbesondere zur Erfassung niedriger Drücke geeignet ist.

Die erfindungsgemässe Lösung dieser Aufgabe besteht darin, dass der Biegebalken ein über die mindestens eine Feder einseitig gelagerter Hebel ist, der vom Bereich des Membranrandes bis etwa zur Mitte der Membran verläuft.

Der wesentliche Vorteil des erfindungsgemässen Druckaufnehmers besteht darin, dass bei Auslenkung der Membran der gesamte Dehnungszustand der Membran über den als einseitig gelagerter Hebel wirkenden Biegebalken auf die mindestens eine Feder konzentriert ist, so dass der dort angeordnete mindestens eine Dehnungsmessstreifen besonders grosse Messsignale abgibt. Da der Biegebalken nur einseitig über die mindestens eine Feder eingespannt ist, treten bei Auslenkung der Membran nahezu keine Zugspannungen entlang des Biegebalkens auf, die als Dehnungsverluste angesehen werden können, weil sie von der mindestens einen Feder nicht erfasst werden, und die zusätzlich zu Nichtlinearitäten bei dem Druckaufnehmer führen können.

Aus der DE-AS 2 219 054 ist zwar ein Druckaufnehmer bekannt, bei dem eine einseitig eingespannte elastische Platte mit einem Dehnungsmessstreifen von einer Membran druckabhängig belastet wird, jedoch ist die elastische Platte getrennt von der Membran angeordnet und wird von dieser über eine Klinge auf Biegung beansprucht. Bei dem bekannten Druckaufnehmer wird also nicht der gesamte Dehnungszustand der Membran, sondern lediglich die Auslenkung der Membranmitte auf die elastische Platte übertragen.

Bei einer vorteilhaften Ausführungsform des erfindungsgemässen Druckaufnehmers ist beiderseits einer Längsachse des Biegebalkens jeweils eine Feder angeordnet, die jeweils ein erstes und ein zweites stegförmiges Biegefeder-Element aufweist; ein Ende des ersten Biegefeder-Elementes bildet das eine Ende der jeweiligen Feder, wobei das andere Ende des ersten Biegefeder-Elementes über einen Verbindungsteil unter Bildung einer U-förmigen Feder mit einem Ende des zweiten Biegefeder-Elementes verbunden ist, dessen anderes Ende das andere Ende der jeweiligen Feder bildet. Dadurch sind Federn geschaffen, die im Bereich ihrer Biegefeder-Elemente bei Membranauslenkung starken mechanischen Beanspruchungen ausgesetzt sind, wobei die Biegefeder-Elemente einer Feder jeweils unterschiedlich gekrümmt werden. Von darauf angeordneten Dehnungsmessstreifen wird demzufolge jeweils einer auf Dehnung und der andere auf Stauchung beansprucht. Die auf einer Feder gehaltenen Dehnungsmessstreifen können dabei in einer Hälfte einer elektrischen Messbrücke angeordnet werden, so dass sich ihre Empfindlichkeiten addieren. Ein weiterer Vorteil besteht darin, dass durch die paarweise Anordnung der Biegefeder-Elemente jeweils unterschiedlich beanspruchte Dehnungsmessstreifen der Messbrücke dicht nebeneinander liegen, so dass sie sich in ihrem Temperaturverhalten gegenseitig kompensieren. Auf diese Weise lassen sich temperaturbedingte Nullpunktfehler besonders gering halten.

Vorzugsweise ist auf dem ersten und zweiten Biegefeder-Element beider Federn jeweils ein Dehnungsmessstreifen angeordnet, weil dann in jedem Zweig einer Messbrücke ein Dehnungsmessstreifen angeordnet werden kann, so dass die Empfindlichkeit der Messbrücke ein Vierfaches der Empfindlichkeit eines einzelnen Dehnungsmessstreifens beträgt.

Bei einer weiteren vorteilhaften Ausführungsform des erfindungsgemässen Druckaufnehmers weist die Membran stegförmige Versteifungselemente auf, die sich entlang von Symmetrielinien vom Membranrand etwa bis zur Mitte der Membran erstrecken. Auf diese Weise wird nämlich eine Erhöhung der Empfindlichkeit des Druckaufnehmers bewirkt, weil die Versteifungselemente die Auslenkung der Membran infolge Druckeinwirkung auf den Biegebalken konzentrieren und so verhindern, dass die Auslenkung der druckempfindlichen Membran im Bereich des steiferen Biegebalkens grösser als die Auslenkung des Balkens selbst wird.

Die Membran kann beispielsweise als kreisförmige Scheibe ausgeführt sein. Von besonderem Vorzug ist jedoch eine quadratische Ausbildung der Membran, wobei der Biegebalken entlang einer Diagonale der Membran angeordnet ist. Hierbei ist nämlich der Biegebalken im Verhältnis zu der Fläche der Membran besonders lang, so dass sich für den Druckaufnehmer eine sehr hohe Empfindlichkeit erzielen lässt.

Um insbesondere bei der Erfassung niedriger Drücke eine hohe Empfindlichkeit und Messgenauigkeit des Druckaufnehmers zu erhalten, ist die Membran mit dem Biegebalken und der mindestens einen Feder einteilig ausgebildet. Dabei ist die Membran vorzugsweise eine dünn geätzte Scheibe, beispielsweise aus Silizium, wobei der Biegebalken, die mindestens eine Feder und der Membranrand als Erhebungen auf der Membran stehengelassen sind. Weist die Membran Versteifungselemente auf, so sind diese zweckmässigerweise ebenfalls als Erhebungen auf der Membran ausgebildet. Durch das Ätzverfahren lassen sich nämlich die im Hinblick auf die Empfindlichkeit und Messgenauigkeit des Druckaufnehmers errechneten Masse der Membran besonders genau einhalten.

Bei einer möglichen Ausführung des erfindungsgemässen Druckaufnehmers mit quadratischer Membran ist diese eine auf einer Fläche von 3,2 mm × 3,2 mm auf eine Dicke von 20 µm dünn geätzte Scheibe; die Höhe des u.a. stehengelassenen Biegebalkens beträgt ca. 0,2 mm. Sind dabei, wie oben bereits beschrieben, auf den beiden Biegefeder-Elementen der beiden Federn vier in einer Messbrücke angeordnete Dehnungsmessstreifen gehalten, so lässt sich bei einer einseitigen Belastung der Membran mit einem Druck von 100 mbar und einer Versorgungsspannung für die Messbrücke von 4 V ein Nutzsignal von ca. 70 mV erreichen.

Zur Schaffung einer Überdrucksicherung weist die Membran im Breich der Membranmitte auf ihrer dem Biegebalken abgewandten Seite eine Erhebung auf; beiderseits der Membran und parallel zu ihr ist jeweils eine Auflagefläche vorhanden, an die sich die Membran mit dem Biegebalken oder ihrer Erhebung bei Überschreiten einer vorgegebenen Auslenkung abstützt.

Zur Erläuterung der Erfindung zeigt

Fig. 1 eine Aufsicht auf die Membran eines bevorzugten Ausführungsbeispiels des erfindungsgemässen Druckaufnehmers und

Fig. 2 einen Querschnitt durch den Druckaufnehmer entlang der Linie AA' in Fig. 1.

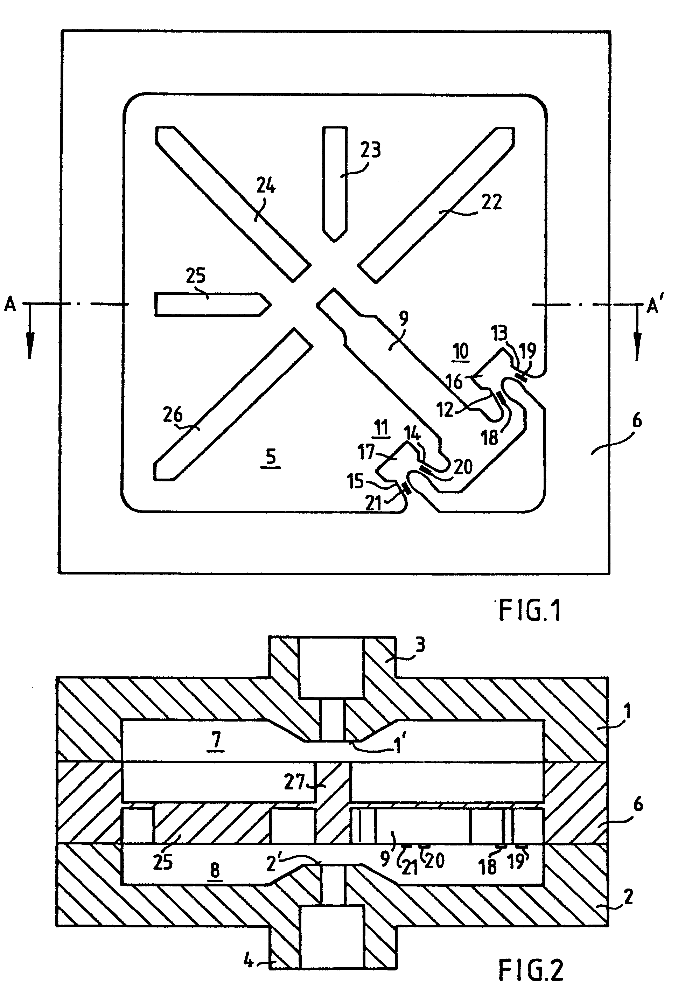

Der in den Fig. 1 und 2 dargestellte Druckaufnehmer weist zwei Gehäuseteile 1 und 2 mit jeweils einem Druckanschlussstutzen 3 bzw. 4 auf. Zwischen den beiden Gehäuseteilen 1 und 2 ist eine Membran 5 mit ihrem Membranrand 6 fest eingespannt und dichtet die zwei Druckräume 7 und 8 in den jeweiligen Gehäuseteilen 1 und 2 gegeneinander ab. Die beiden Druckräume 7 und 8 lassen sich über die Druckanschlussstutzen 3 und 4 mit einem Druckmedium (Gas oder Flüssigkeit) füllen. Die Gehäuseteile 1 und 2 weisen zwei Auflageflächen 1' und 2' auf, die beiderseits der Membran 5 und parallel zu ihr in vorgegebenen Abständen liegen. Auf der Membran 5 erstreckt sich vom Bereich des Membranrandes 6 etwa bis zur Mitte der Membran 5 ein fest mit ihr verbundener Biegebalken 9. Der Biegebalken 9 ist im Bereich des Membranrandes 6 mit jeweils einem Ende zweier Federn 10 und 11 starr verbunden, die mit ihren anderen Enden mit dem Membranrand 6 ebenfalls starr verbunden sind. Jede Feder 10 und 11 weist ein erstes und ein zweites Biegefeder-Element 12, 13 bzw. 14, 15 auf, wobei ein Ende des ersten Biegefeder-Elementes 12 bzw. 14 das eine Ende der jeweiligen Federn 10 bzw. 11 bildet; das andere Ende des ersten Biegefeder-Elementes 12 bzw. 14 ist über ein Verbindungsteil 16 bzw. 17 unter Bildung einer U-förmigen Feder 10 bzw. 11 mit einem Ende des zweiten Biegefeder-Elementes 13 bzw. 15 verbunden, dessen anderes Ende das andere Ende der jeweiligen Feder 10 bzw. 11 bildet. Auf den beiden Biegefeder-Elementen 12 und 13 bzw. 14 und 15 jeder Feder 10 und 11 ist jeweils ein Dehnungsmessstreifen 18 und 19 bzw. 20 und 21 gehalten, wobei die vier Dehnungsmessstreifen 18 bis 21 in bekannter Weise in einer nicht dargestellten elektrischen Messbrücke angeordnet sind. Die Membran 5 weist mehrere stegförmige Versteifungselemente 22 bis 26 auf, die sich vom Membranrand 6 bis zur Mitte der Membran 5 erstrecken. Auf ihrer dem Biegebalken 9 abgewandten Seite weist die Membran 5 im Bereich der Membranmitte eine Erhebung 27 auf, mit der sich die Membran 5 bei Überschreiten eines vorgegebenen Druckes in dem Druckraum 8 zur Überdrucksicherung gegen die Auflagefläche 1' abstützen kann. In dem dargestellten Ausführungsbeispiel des erfindungsgemässen Druckaufnehmers ist die Membran 5 zusammen mit dem Biegebalken 9, den Federn 10 und 11, den Versteifungselementen 22 bis 26 und dem Membranrand 6 aus einer Siliziumscheibe geätzt.

Wird die Membran 5 durch die Druckdifferenz der Druckmedien in den Druckräumen 7 und 8 belastet, so gibt die Membran 5 der Druckdifferenz entsprechend nach und bewirkt eine Zwangsauslenkung des mit ihr verbundenen Biegebalkens 9. Der Dehnungszustand der Membran 5 wird dabei im wesentlichen über die Versteifungselemente 22 bis 26 auf den Biegebalken 9 übertragen, wobei die Versteifungselemente 22 bis 26 als beidseitig gelenkig gelagerte Balken aufzufassen sind, die sich im Bereich der Mitte der Membran 5 auf den Biegebalken 9 abstützen. Der Biegebalken 9 wirkt als federnd gelagerter Hebel, der bei Zwangsauslenkung den Dehnungszustand der Membran 5 auf die beiden Federn 10 und 11 konzentriert. Dabei werden die Federn 10 und 11 derart ausgelenkt, dass ihre Biegefedern 12 und 13 bzw. 14 und 15 eine entgegengesetzte Krümmung erfahren. Herrscht beispielsweise in dem Druckraum 7 ein grösserer Druck als in dem Druckraum 8, so wird die Membran 5 und damit der Biegebalken 9 aus der Zeichenebene in Fig. 1 nach obenhin ausgelenkt. Infolgedessen werden die Biegefeder-Elemente 12 und 13 bzw. 14 und 15 jeder Feder 10 und 11 jeweils unterschiedlich gekrümmt, wobei die Biegung der Biegefeder-Elemente 12 und 14 in die Zeichenebene hinein und die Biegung der Biegefeder-Elemente 13 und 15 aus der Zeichenebene heraus erfolgt. Der jeweilige Dehnungszustand auf den Biegefeder-Elementen 12 bis 15 wird von den darauf angeordneten Dehnungsmessstreifen 18 bis 21 erfasst, wobei die Dehnungsmessstreifen 18 und 20 gestreckt und die Dehnungsmessstreifen 19 und 21 gleichermassen gestaucht werden.

Dadurch, dass die Dehnungsmessstreifen 18 bis 21 in einer nicht dargestellten Messbrücke angeordnet sind, ergibt sich die Empfindlichkeit der Messbrücke aus der Summe der Empfindlichkeit der vier Dehnungsmessstreifen 18 bis 21, während sich diese in ihrem Temperaturverhalten gegenseitig kompensieren.

Mit dem erfindungsgemässen Druckaufnehmer lassen sich insbesondere niedrige Drücke innerhalb von 250 mbar in ausreichend hohe Signalspannungen über 50 mV umsetzen.

**Patentansprüche**

1. Druckaufnehmer mit einer druckempfindlichen Membran (5), die an ihrem Membranrand (6) eingespannt ist und auf der sich ein fest mit ihr·verbundener Biegebalken (9) erstreckt, der im Bereich des Membranrandes (6) mit einem Ende mindestens einer Feder (10, 11) starr verbunden ist, die mit ihrem anderen Ende mit dem Membranrand (6) ebenfalls starr verbunden ist, wobei mindestens ein Dehnungsmessstreifen (18 bis 21) auf der mindestens einen Feder (10, 11) angeordnet ist, dadurch gekennzeichnet, dass der Biegebalken (9) ein über die mindestens eine Feder (10, 11) einseitig gelagerter Hebel ist, der etwa vom Bereich des Membranrandes (6) bis zur Mitte der Membran (5) verläuft.

2. Druckaufnehmer nach Anspruch 1, dadurch gekennzeichnet, dass beidseitig einer Längsachse des Biegebalkens (9) jeweils eine Feder (10, 11) angeordnet ist, dass jede Feder (10, 11) ein erstes und ein zweites stegförmiges Biegefeder-Element (12, 13 bzw. 14, 15) aufweist, dass ein Ende des ersten Biegefeder-Elementes (12 bzw. 14) das eine Ende der jeweiligen Feder (10 bzw. 11) bildet und dass das andere Ende des ersten Biegefeder-Elementes (12 bzw. 14) über ein Verbindungsteil (16 bzw. 17) unter Bildung einer U-förmigen Feder mit einem Ende des zweiten Biegefeder-Elementes (13 bzw. 15) verbunden ist, dessen anderes Ende das andere Ende der jeweiligen Feder (10 bzw. 11) bildet.

3. Druckaufnehmer nach Anspruch 2, dadurch gekennzeichnet, dass auf dem ersten und dem zweiten Biegefeder-Element (12, 13 bzw. 14, 15) jeder Feder (10 bzw. 11) jeweils ein Dehnungsmessstreifen (18, 19 bzw. 20, 21) angeordnet ist.

4. Druckaufnehmer nach einem der vorangehenden Ansprüche, dadurch gekennzeichnet, dass die Membran (5) stegförmige Versteifungselemente (22 bis 26) aufweist, die sich entlang von Symmetrielinien vom Membranrand (6) etwa bis zur Mitte der Membran (5) erstrecken.

5. Druckaufnehmer nach einem der vorangehenden Ansprüche, dadurch gekennzeichnet, dass die Membran (5) quadratisch ausgebildet ist und der Biegebalken (9) entlang einer Diagonale der Membran (5) angeordnet ist.

6. Druckaufnehmer nach einem der vorangehenden Ansprüche, dadurch gekennzeichnet, dass der Biegebalken (9), die mindestens eine Feder (10, 11) und der Membranrand (6) Erhebungen auf der Membran (5) bilden und dass die Membran (5) eine ausserhalb der Erhebungen dünngeätzte Scheibe ist.

7. Druckaufnehmer nach einem der vorangehenden Ansprüche, dadurch gekennzeichnet, dass die Membran (5) im Bereich der Membranmitte auf ihrer dem Biegebalken (9) abgewandten Seite eine Erhebung (27) aufweist und dass beiderseits der Membran (5) und parallel zu ihr jeweils eine Auflagefläche (1', 2') vorhanden ist, an die sich die Membran (5) mit dem Biegebalken (9) oder ihrer Erhebung (27) bei Überschreiten einer vorgegebenen Auslenkung abstützt.

**Claims**

1. A pressure sensor comprising a pressure-sensitive membrane (5) which is clamped at its membrane edge (6) and upon which extends a flexible bar (9) which is permanently connected thereto and which, in the region of the membrane edge (6), is rigidly connected to one end of at least one spring (10, 11) which is likewise rigidly connected at its other end to the membrane edge (6), where at least one wire strain gauge (18 to 21) is arranged on at least one spring (10, 11), characterised in that the flexible bar (9) is a lever which is mounted on one side via at least one spring (10, 11) and which extends approximately from the region of the membrane edge (6) to the centre of the membrane (5).

2. A pressure sensor as claimed in claim 1, characterised in that a spring (10, 11) is arranged on each side of a longitudinal axis of the flexible bar (9), that each spring (10, 11) includes a first and second rib-like flexible spring element (12, 13 and 14, 15 respectively), that one end of the first flexible spring element (12 and 14 respectively) forms the one end of the respective spring (10 and 11 respectively) and that the other end of the first flexible spring element (12 and 14 respectively) is connected via a connecting element (16 and 17 respectively), forming a U-shaped spring, to one end of the second flexible spring element (13 and 15 respectively) whose other end forms the other end of the respective spring (10 and 11 respectively).

3. A pressure sensor as claimed in claim 2, characterised in that a wire strain gauge (18, 19 and 20, 21 respectively) is arranged on the first and second flexible spring element (12, 13 and 14, 15) of each spring (10 and 11 respectively).

4. A pressure sensor as claimed in one of the preceding claims, characterised in that the membrane (5) is provided with rib-like stiffening elements (22 to 26) which extend along symmetrical lines from the membrane edge (6) approximately to the centre of the membrane (5).

5. A pressure sensor as claimed in one of the preceding claims, characterised in that the membrane (5) is of square shape and the flexible bar (9) is arranged along a diagonal of the membrane (5).

6. A pressure sensor as claimed in one of the preceding claims, characterised in that the flexible bar (9), at least one spring (10, 11), and the membrane edge (6) form elevations on the membrane (5) and that the membrane (5) is a plate which is thin-etched outside of the elevations.

7. A pressure sensor as claimed in one of the preceding claims, characterised in that on its side facing away from the flexible bar (9), in the region of its centre the membrane (5) is provided with an elevation (27) and that on both sides of the membrane (5) and parallel thereto a bearing surface (1', 2') is in each case provided against with the membrane (5) abuts with the flexible bar (9) or its elevation (27) when a predetermined deflection is exceeded.

## Revendications

1. Capteur de pression comprenant une membrane (5) sensiblement à la pression, qui est maintenue par son bord (6) et sur laquelle s'étend et est fixé solidement un barreau de flexion (9), qui est relié rigidement dans la région du bord (6) de la membrane à l'une des extrémités d'au moins un ressort (10, 11) dont l'autre extrémité est également reliée rigidement au bord (6) de la membrane, au moins une jauge de contrainte (18 à 21) étant disposée sur l'un au moins des ressorts (10, 11), caractérisé en ce que le barreau de flexion (9) est un levier qui est monté d'un côté par au moins un ressort (10, 11) et qui s'étend de la région du bord (6) de la membrane jusqu'à peu près au milieu de la membrane.

2. Capteur de pression suivant la revendication 1, caractérisé en ce que des ressorts (10, 11) sont disposés respectivement de part et d'autre d'un axe longitudinal du barreau de flexion (9), que chaque ressort (10, 11) comprend un premier et un second élément à élasticité en flexion (12, 13 et 14, 15) en forme de barrette, en ce qu'une extrémité du premier élément à élasticité en flexion (12 et 14) forme l'une des extrémités d'un ressort (10, 11), et en ce que l'autre extrémité du premier élément à élasticité en flexion (12 et 14) est reliée, par une partie de liaison (16 et 17) et en formant un ressort en forme de U, à une extrémité du second élément à élasticité en flexion (13 et 15) dont l'autre extrémité forme l'autre extrémité du ressort respectif (10 et 11).

3. Capteur de pression suivant la revendication 2, caractérisé en ce que, sur le premier et sur le second élément à élasticité en flexion (12, 13 et 14, 15) de chaque ressort (10, 11), est disposée respectivement une jauge de contrainte (18, 19 et 20, 21).

4. Capteur de pression suivant l'une des revendications précédentes, caractérisé en ce que la membrane (5) comporte des éléments de raidissement (22 à 26), qui sont en forme de barrettes et qui s'étendent le long des lignes de symétrie du bord (6) de la membrane jusqu'à environ le milieu de la membrane (5).

5. Capteur de pression suivant l'une des revendications précédentes, caractérisé en ce que la membrane (5) est carrée et le barreau de flexion (9) est disposé le long d'une diagonale de la membrane (5).

6. Capteur de pression suivant l'une des revendications précédentes, caractérisé en ce que le barreau de flexion (9), l'un au moins des ressorts (10, 11) et le bord de la membrane (6) forment des parties saillantes sur la membrane (5), et en ce que la membrane (5) est un disque aminci par attaque chimique en dehors des parties saillantes.

7. Capteur de pression suivant l'une des revendications précédentes, caractérisé en ce que la membrane (5) comprend, dans la région du milieu de la membrane et sur son côté opposé au barreau de flexion (9), une partie saillante (27), et en ce que de part et d'autre de la membrane (5) et parallèlement à elle, est prévue respectivement une surface d'appui (1', 2'), sur laquelle la membrane (5) s'appuie par le barreau de flexion (9) ou par sa partie saillante (27), lorsqu'elle s'écarte au-delà d'une position prescrite.

FIG.1

FIG.2